# EUROPÄISCHE PATENTSCHRIFT

(11) **EP 2 113 422 B1**
(45) Veröffentlichungstag und Bekanntmachung des Hinweises auf die Patenterteilung: **26.10.2011**
(21) Anmeldenummer: 09000803.8
(22) Anmeldetag: 21.01.2009
(51) Int. Cl.: B60R 13/02, B60R 13/04, B29C 41/20

(54) **Zierteil für ein Kraftfahrzeug**
Trim parts for a motor vehicle
Pièce décorative pour un véhicule automobile

(30) Priorität: 22.04.2008 DE 102008020151
(43) Veröffentlichungstag der Anmeldung: 04.11.2009
(73) Patentinhaber: DURA Automotive Body & Glass Systems GmbH, 58840 Plettenberg (DE)
(72) Erfinder: Gerndorf, ralf, 57413 Finnentrop (DE); Schneider, Frank, 58762 Altena (DE); Halilcavusogullari, Ahmet, 58791 Werdohl (DE)
(74) Vertreter: Zinnecker, Armin

(56) Entgegenhaltungen:
- EP-A- 1 621 407
- EP-A- 1 759 927
- US-A- 4 493 506

## Beschreibung

Die Erfindung betrifft ein Zierteil für ein Fahrzeug, insbesondere für ein Kraftfahrzeug.

Ein zerteil nach dem oberbegriff des anspruchs 1 ist aus der EP-A-1 621 407 bekannt.

Aufgabe der Erfindung ist es, ein verbessertes Zierteil für ein Fahrzeug, insbesondere für ein Kraftfahrzeug, vorzuschlagen.

Erfindungsgemäß wird diese Aufgabe durch die Merkmale des Anspruchs 1 gelöst. Das Zierteil umfaßt ein Trägerteil und ein Designteil. Das Trägerteil weist eine langgestreckte, leicht gekrümmte Hauptfläche auf. Das Trägerteil übernimmt eine mechanische Funktion, insbesondere eine Befestigungsfunktion und/oder eine oder mehrere weitere mechanische Funktionen. Das Designteil, das auch als Außenteil oder Sichtteil bezeichnet werden kann, weist eine Oberfläche auf, die im eingebauten Zustand, also in dem mit dem Fahrzeug oder Kraftfahrzeug verbundenen Zustand, sichtbar ist. Das Zierteil kann für die Innenseite oder für die Außenseite eines Fahrzeugs oder Kraftfahrzeugs bestimmt sein.

Das Zierteil besteht aus Kunststoff. Es ist in einem 2-Komponentenverfahren (2K-Verfahren) hergestellt. Bei diesem Verfahren wird zunächst eines der beiden Teile, vorzugsweise das Trägerteil, hergestellt. Anschließend wird im gleichen Werkzeug das andere Teil, vorzugsweise das Designteil, hergestellt.

Das Designteil weist im Anschluß an einen Rand des Designteils eine Verdickung auf. Diese Verdickung bringt den Vorteil mit sich, daß das Zierteil weitgehend spannungsfrei herstellbar ist. Bei der Herstellung des Zierteils im 2K-Verfahren entsteht im Angußbereich, also in dem Bereich, in dem das Kunststoffmaterial in die Form gelangt, ein hoher Massedruck, was insbesondere bei Bauteilen mit einer verhältnismäßig geringen Wandstärke zu unerwünschten Spannungen in dem Bauteil führt. Durch die Verdickung, die das Designteil im Anschluß an einen Rand aufweist, ist es möglich, dieses Teil spannungsfrei oder weitgehend spannungsfrei herzustellen.

Durch die Erfindung können Zierteile aller Art hergestellt werden, insbesondere Blenden und Säulenblenden für die Säulen eines Kraftfahrzeugs.

Das Trägerteil weist eine der Verdickung entsprechende Vertiefung oder Aussparung auf. Hierdurch kann auch im Bereich der Verdickung des Designteils eine gleichbleibende Gesamtstärke des Zierteils erreicht werden.

Eine vorteilhafte Weiterbildung ist dadurch gekennzeichnet, daß die Verdickung an einer dem Rand abgewandten Seite eine Kante aufweist. Die Kante kann rechtwinklig oder schräg zum Rand oder zur Längserstreckung des Bauteils verlaufen. Sie dient dazu, beim Einbringen des Kunststoffmaterials in die dem Designteil entsprechende Form einen gleichmäßigen Gegendruck aufzubauen.

Ein Ausführungsbeispiel der Erfindung wird nachstehend anhand der beigefügten Zeichnung im einzelnen erläutert. In der Zeichnung zeigt
- Fig. 1: eine Säulenblende eines Kraftfahrzeugs in einer perspektivischen Darstellung,
- Fig. 2: die Säulenblende gemäß Fig. 1 in einer Ansicht von vorne,
- Fig. 3: einen Schnitt längs der Linie A-A in Fig. 2 und
- Fig. 4: einen Schnitt längs der Linie B-B in Fig. 2.

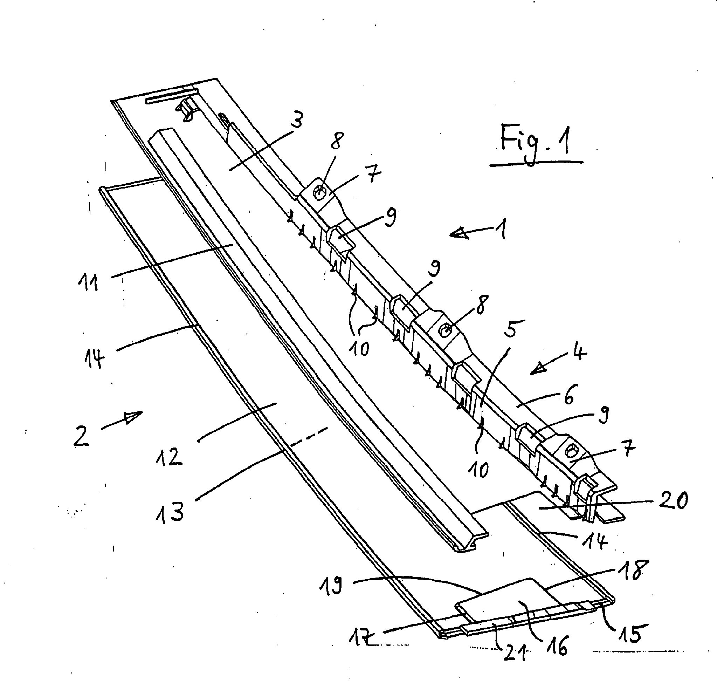

Die in den Figuren dargestellte Säulenblende für die B-Säule eines Kraftfahrzeugs besteht aus einem Trägerteil 1 und einem Designteil 2, die in Fig. 1 aus Gründen der besseren zeichnerischen Darstellbarkeit getrennt voneinander gezeigt sind. Das Trägerteil 1 umfaßt eine langgestreckte, leicht gekrümmte Hauptfläche 3, deren Längsseiten in einem spitzen Winkel aufeinander zulaufen und deren Schmalseiten im wesentlichen parallel zueinander verlaufen. An einer Längsseite des Trägerteils 1 ist ein Glasführungskanal 4 vorgesehen, der ein L-förmiges Profil aufweist, von dem ein Schenkel (5) in einem annähernd rechten Winkel von der Hauptfläche 3 absteht und der andere Schenkel (6) parallel zur Hauptfläche 3 nach außen weist. Im eingebauten Zustand nimmt das von den Schenkeln erzeugte L eine Scheibe des Kraftfahrzeugs auf. Der zur Hauptfläche 3 parallele Schenkel 6 weist schräg dazu verlaufende Befestigungsflächen 7 auf, in denen Befestigungslöcher 8 vorgesehen sind, die Anschraubpunkte zum Anschrauben des Trägerteils 1 an dem Kraftfahrzeug bilden. In dem Bereich, in dem die Schenkel 5, 6 des Glasführungskanals 4 aneinandergrenzen, sind als Fenster ausgestaltete Aussparungen (9) vorhanden, die Dichtungsaufnahmen bilden, in denen hakenartige Fortsätze einer Dichtung verrastet werden können. Ferner wird der von der Hauptfläche 3 abstehende Schenkel 5 des Glasführungskanals 4 durch Rippen 10 verstärkt.

Im Bereich der anderen Längsseite des Trägerteils 1 ist ein Umbug 11 vorgesehen, der ein L-förmiges, zum Glasführungskanal 4 offenes Profil aufweist. Der Umbug 11 dient zur Befestigung an einem Karosserieflansch des Kraftfahrzeugs, auf den er aufgezogen und an den er angeschraubt werden kann.

Das Designteil 2 umfaßt eine dem Trägerteil 1 zugewandte Hauptfläche 12. Auf der gegenüberliegenden Seite ist die Sichtfläche 13 vorgesehen. Im eingebauten, mit dem Kraftfahrzeug verbundenen Zustand ist die Sichtfläche 13 von außen oder von innen sichtbar. Es kann sich insbesondere um eine Hochglanzfläche (high-gloss-Fläche) handeln oder um eine sonstige Fläche mit den gewünschten Oberflächeneigenschaften hinsichtlich Farbe, Glanz, metallischem Aussehen und ähnlichem. Das Designteil 2 weist an seinen Längsrändern jeweils eine zum Trägerteil 1 gerichtete Erhöhung 14 auf, durch die die Längsränder der Hauptfläche 3 des Trägerteils 1 verdeckt werden.

Das Designteil 2 weist im Anschluß an einen Rand 15 des Designteils 2 eine Verdickung 16 auf. Die Verdickung 16 befindet sich auf der Seite der Hauptfläche 12 des Designteils 2, also auf der der Sichtfläche 13 abgewandten Seite. Dementsprechend ist die Verdickung 16 dem Trägerteil 1 zugewandt. Der Rand 15 befindet sich an einer Schmalseite des Designteils 2. Der Rand 15 bildet den Hauptanspritzpunkt des Designteils 2. Bei dem Rand 15 handelt es sich also um den Rand, durch den das Kunststoffmaterial in die Form des Werkzeugs eingespritzt wird. Bei der in der Zeichnung gezeigten Säulenblende findet ein Filmanguß statt, also ein Anguß, bei dem das Kunststoffmaterial im wesentlichen über die gesamte Breite des Randes 15 eingespritzt wird.

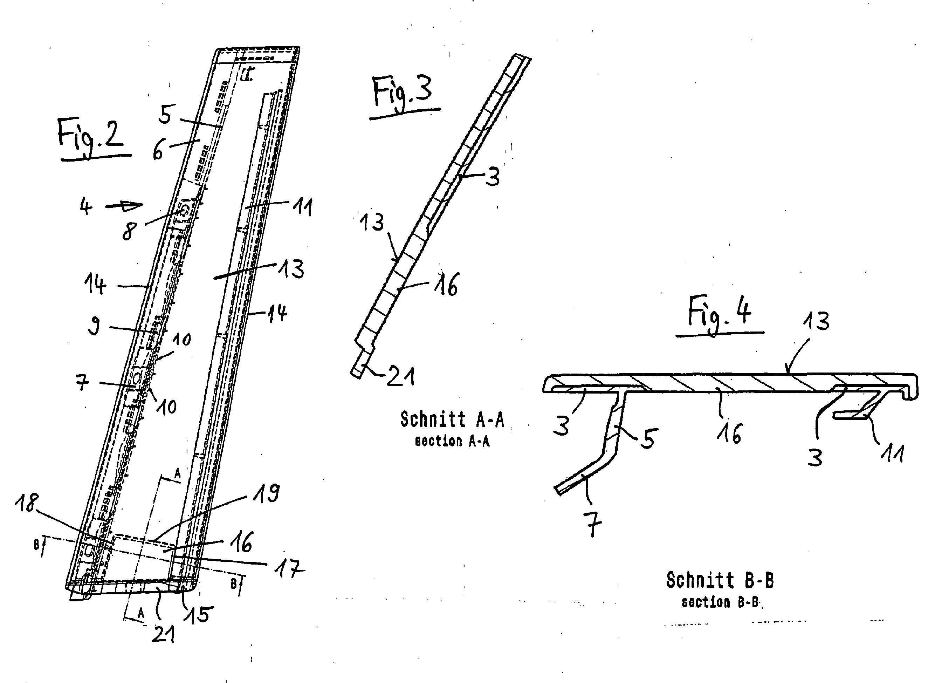

Die seitlichen Begrenzungen 17, 18 der Verdickung verlaufen im wesentlichen parallel zu und im Abstand von den Längsrändern 14 des Designteils 2. Die von dem Rand 15 beabstandete Endbegrenzung 19 der Verdickung 16 verläuft im wesentlichen rechtwinklig zur Längserstreckung des Designteils 2, wie insbesondere aus Fig. 2 ersichtlich.

Das Trägerteil 1 weist in seiner Hauptfläche 3 eine Aussparung 20 auf, die in ihrer Größe und Form der Verdickung 16 entspricht. Die Stärke der Verdickung 16 ist im wesentlichen genauso groß wie die Wandstärke der Hauptfläche 3 des Trägerteils 1. Die Gesamtwandstärke von Trägerteil 1 und Designteil 2 ist also überall im wesentlichen gleich groß. Im Falle einer größeren Wandstärke des Trägerteils 1 und/oder einer geringeren Stärke der Verdickung 16 könnte in dem Trägerteil 1 anstelle der Aussparung 20 auch eine entsprechende, dem Designteil 2 zugewandte Vertiefung vorgesehen sein, um überall dieselbe Gesamtwandstärke zu erreichen.

Die Kante in dem Spritzgußwerkzeug, die die hintere Endbegrenzung 19 der Verdickung 16 erzeugt, wirkt beim Spritzvorgang in der Weise, daß ein weitgehend gleichmäßiger Gegendruck aufgebaut wird.

Im Bereich des Rands 15 ist an dem Designteil 2 eine Leiste 21 vorgesehen, die beim Einbau der Säulenblende an der Schachtleiste der Karosserie oder der Kraftfahrzeugtüre anliegt.

Im Ausführungsbeispiel hat das Trägerteil 1 eine Wandstärke von 1,3 mm und das Designteil 2 eine Wandstärke von 2,2 mm. Die Gesamtwandstärke beträgt also über den gesamten Bereich des aus Trägerteil 1 und Designteil 2 bestehenden Zierteils 3,5 mm. Als Material für das Trägerteil 1 sind insbesondere ABS und PC-ABS geeignet, als Material für das Designteil 2 ist PMMA besonders geeignet. Ferner kann eine dritte Komponente verwendet werden, die vorzugsweise aus TPE besteht. Folgende Materialpaarungen sind besonders geeignet:
PMMA/ABS
PMMA/PC-ABS
PMMA/ABS/TPE
PMMA/PC-ABS/TPE

Die Materialien können je nach Anwendung mit und ohne Füllstoff verarbeitet werden.

Durch die Erfindung wird es ermöglicht, im Angußbereich und/oder an anderen relevanten Bauteilstellen bei 2K-Bauteilen ein spannungsfreies Bauteil zu erzeugen. Dies ist besonders wichtig bei optisch anspruchsvollen Bauteilen wie Blenden, insbesondere Säulenblenden. Die Erfindung kann allerdings bei Zierteilen aller Art zur Anwendung kommen.

Nach den vorbekannten Verfahren war es nur sehr schwer möglich, Zierteile, insbesondere Blenden, im Angußbereich spannungsfrei herzustellen. Durch einen zu großen Einfluß des Massedrucks im Bauteil wurden große Bauteilabweichungen hervorgerufen. Ferner konnten Bauteilprüfungen nicht bestanden werden, bei denen das 2K-Bauteil wechselnden Temperaturen unterzogen wurde, beispielsweise zwischen - 40° C und +80° C mehrmals im Wechsel.

Durch die Erfindung wird es ermöglicht, 2K-Zierteile mit einer verhältnismäßig geringen Gesamtwandstärke von 3 bis 3,5 mm herzustellen. Die Erfindung kann auch bei Zierteilen angewendet werden, die mehr als 2 Komponenten aufweisen, also bei 3K-Bauteilen und Bauteilen mit noch mehr Komponenten.

## Patentansprüche

1. Zierteil für ein Fahrzeug mit einem Trägerteil (1), das eine langgestreckte, leicht gekrümmte Hauptfläche (3) aufweist, und mit einem Designteil (2), das im Anschluß an einen Rand (15) eine Verdickung (16) aufweist, wobei das Trägerteil (1) eine der Verdickung (16) entsprechende Vertiefung oder Aussparung (20) aufweist, die in ihrer Größe und Form der Verdickung (16) des Designteils (2) entspricht,
**dadurch gekennzeichnet,**
**daß** das Zierteil aus Kunststoff in einem 2-Komponentenverfahren hergestellt ist
und **daß** sich der Rand (15), an den sich die Verdickung (16) anschließt, an einer Schmalseite des Designteils (2) befindet.

2. Zierteil nach Anspruch 1, **dadurch gekennzeichnet, daß** die Verdickung (16) an einer dem Rand (15) abgewandten Seite eine Kante (19) aufweist.

## Claims

1. Trim part for a vehicle with a support part (1), which comprises an elongated, slightly curved main surface (3), and with a design part (2), which comprises a thickening (16) in connection with an edge (15), whereby the support part (1) comprises an indentation or recess (20) corresponding to the thickening (16), which recess corresponds in its size and form to the thickening (16) of the design part (2),
**characterised in that**
the trim part is produced from plastic in a two-component procedure
and that the edge (15), onto which the thickening (16) is attached, is situated on a narrow side of the design part (2).

2. Trim part according to claim 1, **characterised in that** the thickening (16) comprises a flange (19) on the side turned away from the edge (15).

## Revendications

1. Pièce décorative pour un véhicule automobile avec une partie de support (1) qui présente une face principale allongée, légèrement courbée (3), et avec une partie de design (2) qui, au raccordement à un bord (15), présente un épaississement (16), où la partie de support (1) présente un creux ou évidement (20) correspondant à l'épaississement (16) qui, dans sa grandeur et forme, correspond à l'épaississement (16) de la partie de design (2),
**caractérisée en ce que**
la pièce décorative est fabriquée en matériau synthétique selon un procédé à 2 composants,
et **en ce que** le bord (15), auquel fait suite l'épaississement (16), se trouve à un côté étroit de la partie de design (2).

2. Pièce décorative selon la revendication 1, **caractérisée en ce que** l'épaississement (16) présente à un côté éloigné du bord (15) une arête (19).
